# EUROPEAN PATENT SPECIFICATION

(11) **EP 2 468 818 B1**
(45) Date of publication and mention of the grant of the patent: **19.11.2014**
(21) Application number: 11177773.6
(22) Date of filing: 17.08.2011
(51) Int. Cl.: C08L 51/04, C08L 67/02, C08L 69/00, C08L 83/10

(54) **Polycarbonate resin composition and molded product using the same**
Polycarbonatharzzusammensetzung und geformtes Produkt damit
Composition de résine polycarbonate et produit moulé l'utilisant

(30) Priority: 27.12.2010 KR 20100135698
(43) Date of publication of application: 27.06.2012
(73) Proprietor: CHEIL INDUSTRIES INC., Kumi-city, Kyungsangbuk-do (KR)
(72) Inventor: Park, Jung-Eun, Uiwang-si, Gyonggi-do (KR); Ha, Doo-Han, Uiwang-si, Gyonggi-do (KR)
(74) Representative: Bublak, Wolfgang

(56) References cited:
- US-A- 4 782 115
- US-A- 4 794 141
- US-A1- 2006 030 664
- US-B1- 6 727 312

## Description

This disclosure relates to a polycarbonate resin composition and a molded product using the same.

Polyester resins have excellent mechanical characteristics, electric characteristics, and chemical resistances. Particularly, since the polymer resins have nice molding workability due to its fast crystallization rate, they are spotlighted as thermosetting resins for injection molding and metal-substituting materials. The polyester resins are widely used for automobile, electric, and electronic industries.

However, since the polyester resins have a glass transition temperature of 40° C to 60° C, they have low thermal distortion temperature and low impact resistance at room temperature and low temperature.

Therefore, polyester/polycarbonate alloy resins are researched in the industrial areas requiring impact resistance.

The polyester/polycarbonate alloy resins, however, have a problem in that they hardly secure both impact resistance and heat resistance at low temperature at the same time.

A method of adding acrylonitrile-butadiene-styrene copolymer (ABS) to the polyester/polycarbonate alloy resin to improve the impact resistance was introduced, but the method causes a decrease in the heat resistance. Therefore, there is limitation in using the material for automobiles, which require high heat resistance.

Also, a method of adding an ethylene-propylene copolymer, an ethylene-propylene-diene copolymer, or a methylmethacrylate-butadiene-styrene (MBS) copolymer to improve the impact resistance was introduced, but the simple addition of the impact-reinforcing agent for acquiring impact resistance remarkably decreases the heat resistance while deteriorating the fluidity.

It is the object of the present invention to provide a polycarbonate resin composition which has excellent heat resistance and low-temperature impact resistance and has high exterior brilliance.

Another object is the provision of a molded product made of the polycarbonate resin composition.

Above objects have been achieved by the provision of a polycarbonate resin composition as defined in claim 1.

The polycarbonate-polysiloxane copolymer (A3) may include 1 to 99 wt% of a polycarbonate block and 1 to 99 wt% of a polysiloxane block, and the polycarbonate-polysiloxane copolymer (A3) may have a weight average molecular weight of 10,000 to 30,000 g/mol.

The rubber includes a diene-based compound and the unsaturated compound further includes a hetero cyclic compound, an aromatic vinyl compound, a vinyl cyanide compound, or a combination thereof.

The polycarbonate resin composition may further include at least one additive of an antibacterial agent, a heat stabilizer, an antioxidant, a release agent, a light stabilizer, an inorganic material additive, a surfactant, a coupling agent, a plasticizer, an admixture, a stabilizer, a lubricant, an antistatic agent, a coloring aid, a flame proofing agent, a weather-resistance agent, a colorant, an ultraviolet (UV) absorber, an ultraviolet (UV) blocking agent, a flame retardant, a filler, or a combination thereof.

According to another embodiment, a molded product using the polycarbonate resin composition is provided.

Hereinafter, further embodiments will be described in detail.

Since the polycarbonate resin composition has excellent heat resistance and low-temperature impact resistance and has high exterior gloss of an injection molded product, it may be used for diverse molded products, such as electronic parts, automobile parts, general products. Particularly, it may be used for the exteriors of an automobile that are exposed to the outside, such as bumper.

Exemplary embodiments will hereinafter be described in detail. However, these embodiments are only exemplary, and the present invention is not limited thereto.

As used herein, when a specific definition is not provided, The term "substituted" may refer to one substituted with at least a substituent selected from the group consisting of a halogen (F, Cl, Br, I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C30 heteroaryl group, or a combination thereof.

As used herein, when a specific definition is not otherwise provided, the prefix "hetero" may refer to at least one heteroatom of N, O, S and P in a ring.

As used herein, when a specific definition is not otherwise provided, the term "(meth)acrylate" may refers to both "acrylate" and "methacrylate.".

A polycarbonate resin composition according to one embodiment includes (A) a mixed resin including (A1) a polycarbonate resin, (A2) a polybutylene terephthalate resin, and (A3) a polycarbonate-polysiloxane copolymer, and (B) a graft copolymer including an unsaturated compound including an acryl-based compound graft-polymerized into a rubber.

Exemplary components included in the polycarbonate resin composition according to embodiments will hereinafter be described in detail.

### (A) Mixed resin

### (A1) Polycarbonate resin

The polycarbonate resin may be prepared by reacting diphenols of the following Chemical Formula 1 with a compound of phosgene, halogen acid ester, carbonate ester, or a combination thereof.

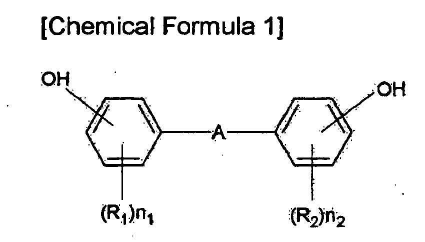

In Chemical Formula 1,

A is a single bond, a substituted or unsubstituted C1 C1 to C30 linear or branched alkylene group, a substituted or unsubstituted C2 to C5 alkenylene group, substituted or unsubstituted C2 to C5 alkylidene group, substituted or unsubstituted C1 to C30 linear or branched haloalkylene group, substituted or unsubstituted C5 to C6 cycloalkylene group, substituted or unsubstituted C5 to C6 cycloalkenylene group, substituted or unsubstituted C5 to C10 cycloalkylidene group, substituted or unsubstituted C6 to C30 arylene group, a substituted or unsubstituted C1 to C20 linear or branched alkoxylene group, a halogen acid ester group, a carbonate ester group, CO, S, or SO₂,
each R₁ and R₂ are each independently a substituted or unsubstituted C1 to C30 alkyl group, or a substituted or unsubstituted C6 to C30 aryl group, and
n₁ and n₂ are each independently integers ranging from 0 to 4.

The diphenols represented by the above Chemical Formula 1 may be used in combinations to constitute repeating units of the polycarbonate resin. The diphenols include hydroquinone, resorcinol, 4,4'-dihydroxydiphenyl, 2,2-bis(4-hydroxyphenyl)propane (referred to as "bisphenol-A"), 2,4-bis(4-hydroxyphenyl)-2-methylbutane, bis(4-hydroxyphenyl)methane, 1,1-bis(4-hydroxyphenyl)cyclohexane,
2,2-bis(3-chloro-4-hydroxyphenyl)propane,
2,2-bis(3,5-dimethyl-4-hydroxyphenyl)propane,
2,2-bis(3,5-dichloro-4-hydroxyphenyl)propane,
2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. In one embodiment, 2,2-bis(4-hydroxyphenyl)-propane, 2,2-bis(3,5-dichloro-4-hydroxyphenyl)-propane, or 1,1-bis(4-hydroxyphenyl)-cyclohexane of the diphenols may be preferable. In another embodiment, 2,2-bis(4-hydroxyphenyl)-propane may be more preferable.

In one embodiment, the polycarbonate resin has a weight average molecular weight ranging from 10,000 to 200,000 g/mol, and in another embodiment, it has a weight average molecular weight ranging from 15,000 to 80,000 g/mol, but is not limited thereto.

The polycarbonate resin may be mixtures of polycarbonate resins obtained using two or more diphenols that are different from each other. The polycarbonate resin may be a linear polycarbonate resin, a branched polycarbonate resin, a polyester carbonate copolymer, and the like.

The linear polycarbonate resin may include a bisphenol-A based polycarbonate resin. The branched polycarbonate resin may include one produced by reacting a multi-functional aromatic compound such as trimellitic anhydride, trimellitic acid, and so on with diphenols and a carbonate. The multi-functional aromatic compound may be included in an amount of 0.05 to 2 mol% based on the total weight of the branched polycarbonate resin. The polyester carbonate copolymer resin may include one produced by reacting a difunctional carboxylic acid with diphenols and a carbonate. The carbonate may include a diaryl carbonate such as diphenyl carbonate, and ethylene carbonate.

The polycarbonate resin is included in an amount of 20 to 80 wt%, specifically 30 to 70 wt% based on a total weight of the mixed resin including the polycarbonate resin, polybutylene terephthalate resin, and polycarbonate-polysiloxane copolymer. When the polycarbonate resin is included within the range, the polycarbonate resin composition has improved impact resistance, heat resistance, workability, and the like.

### (A2) Polybutylene terephthalate resin

The polybutylene terephthalate resin is a sort of aromatic polyester resin, and it is a polymer obtained by performing a condensation polymerization onto 1,4-butanediol monomer with terephthalic acid or dimethyl terephthalate monomer through an esterfication reaction or an ester exchange reaction.

To increase impact strength, the polybutylene terephthalate resin may be copolymerized with polytetramethylene glycol (PTMG), polyethylene glycol (PEG), polypropylene glycol (PPG), low-molecular aliphatic polyester or aliphatic polyamide, or it may be used in the form of a modified polybutylene terephthalate resin by being blended with an impact-improving component.

The polybutylene terephthalate resin may have an intrinsic viscosity[η] of 0.35 to 1.5 dℓ/g when it is measured with o-chloro phenol at 25° C. According to one embodiment, it may have an intrinsic viscosity[η] of 0.5 to 1.3 dℓ/g. When the intrinsic viscosity of the polybutylene terephthalate resin falls in the range, the mechanical strength and formability are excellent.

The polybutylene terephthalate resin is included in an amount of 15 to 70 wt%, and specifically 23 to 70 wt% based on a total weight of the mixed resin including the polycarbonate resin, polybutylene terephthalate resin, and polycarbonate-polysiloxane copolymer. When the amount of the polybutylene terephthalate resin falls in the range, the heat resistance and impact resistance are excellent and the chemical resistance and weather resistance may be improved.

### (A3) Polycarbonate-polysiloxane copolymer

The polycarbonate-polysiloxane copolymer includes a polycarbonate block and a polysiloxane block.

The polycarbonate block includes a structural unit derived from polycarbonate resin (A) that is aforementioned.

The polysiloxane block may include a structural unit represented by the following Chemical Formula 2.

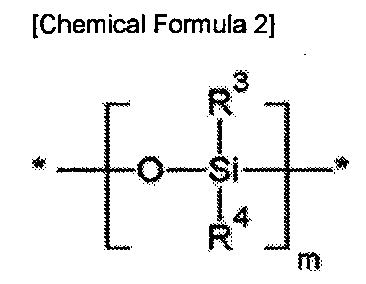

In Chemical Formula 2,

R³ and R⁴ are the same or different and hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, a substituted or unsubstituted C6 to C30 aryl group, or NRR' (wherein R and R' are the same or different, and hydrogen, or a substituted or unsubstituted C1 to C20 alkyl group), and
2≤m<10,000.

In the above Chemical Formula 2, 2≤m<10,000, specifically 2≤m<1,000. When m is within the above range, impact resistance is excellent and it is appropriate for an extrusion process due to maintenance of suitable viscosity.

The polycarbonate-polysiloxane copolymer may include 1 wt% to 99 wt% of the polycarbonate block and 1 wt% to 99 wt% of the polysiloxane block, specifically 40 wt% to 80 wt% of the polycarbonate block and 20 wt% to 60 wt% of the polysiloxane block. When the polycarbonate block and the polysiloxane block are included in the above ratio, impact resistance may be improved.

The polycarbonate-polysiloxane copolymer may have a weight average molecular weight of 10,000 g/mol to 30,000 g/mol, specifically 15,000 g/mol to 22,000 g/mol. When the polycarbonate-polysiloxane copolymer has a weight average molecular weight within the above the range, low temperature impact resistance is excellent.

The addition of the polycarbonate-polysiloxane copolymer to a polycarbonate resin composition not only makes it possible to obtain an excellent impact-reinforcing effect at low temperature although a small amount of a graft copolymer, which will be described later, is used, but also improves heat resistance due to the use of the graft copolymer in such a small amount.

The polycarbonate-polysiloxane copolymer is included in an amount of 5 to 30 wt%, and specifically 7 to 15 wt% based on a total weight of the mixed resin including the polycarbonate resin, polybutylene terephthalate resin, and polycarbonate-polysiloxane copolymer. When the amount of the polycarbonate-polysiloxane copolymer falls in the range, low-temperature impact resistance, heat resistance and physical balance of workability are excellent.

### (B) Graft copolymer

The graft copolymer may act as an impact-reinforcing agent in the polycarbonate resin composition.

The graft copolymer is a copolymer where an unsaturated compound including an acryl-based compound is graft-polymerized into a rubber. Also, the graft copolymer may have a core-shell structure in which the unsaturated compound is grafted into the core structure of the rubber so as to form a hard shell.

The rubber includes a diene-based compound, a silicon-based compound, or a combination thereof, and preferably a diene-based compound.

The diene-based compound may include butadiene, isoprene, a polymer thereof, and the like. The polymer may include a styrene-butadiene polymer, an acrylonitrile-butadiene polymer, and the like.

The rubber has an average particle diameter ranging from 0.4 to 1 µm. Within this average particle diameter range, balance between impact resistance and coloring properties is implemented.

The acryl-based compound which is a sort of unsaturated compound that forms the shell may be (meth)acrylic acid alkyl ester, (meth)acrylic acid ester, or a combination thereof. Herein, the alkyl is a C1 to C10 alkyl. The non-limiting examples of the (meth)acrylic acid alkyl ester include methyl(meth)acrylate, ethyl(meth)acrylate, propyl(meth)acrylate, and butyl(meth)acrylate, and among them all, it is preferred to use methyl(meth)acrylate.

The unsaturated compound includes a hetero cyclic compound, an aromatic vinyl compound, a vinyl cyanide compound, or a combination thereof, besides the acryl-based compound

The hetero cyclic compound may include maleic anhydride, alkyl or phenyl N-substituted maleimide, and the like.

The aromatic vinyl compound may include styrene, C1 to C10 alkyl substituted styrene, halogen substituted styrene, and the like. These compounds may be used singularly or as a mixture of two or more. The alkyl substituted styrene may include o-ethyl styrene, m-ethyl styrene, p-ethyl styrene, α-methyl styrene, and the like.

The vinyl cyanide compound may include acrylonitrile, methacrylonitrile, ethacrylonitrile, and the like. These compounds may be used singularly or as a mixture of two or more.

The graft copolymer may have an average particle diameter of 0.1 to 0.5 µm, and when the average particle diameter falls in the range, the graft copolymer is dispersed so well that when an impact is applied from the outside, the graft copolymer easily absorb impact, improving an impact-reinforce effect.

The graft copolymer may include the rubber in an amount of 20 to 80 wt% and the unsaturated compound in an amount of 20 to 80 wt%. According to one embodiment, it may include the rubber in an amount of 30 to 70 wt% and the unsaturated compound in an amount of 30 to 70 wt%. Within the above ratio, the compatibility with the polycarbonate resin is so excellent that the impact reinforcing effect may be maximized, and the stay stability during injection is fine, and high glossy characteristics may be obtained.

Since the unsaturated compound grafted into the rubber does not include a reactive functional group such as glycidyl methacrylate and maleic anhydride but includes un-reactive functional group, there is no color change during injection stay, no generation of gas, and no hazy appearance observed in an injection molded product. Therefore, it may be used for a paintless product.

The graft copolymer is included in an amount of 8 to 25 parts by weight based on 100 parts by weight of mixed resin including polycarbonate resin, polybutylene terephthalate resin and polycarbonate-polysiloxane copolymer. According to one embodiment, the graft copolymer may be included in an amount of 10 to 20 parts by weight. When the graft copolymer is included in the amount range, excellent low-temperature impact resistance and heat resistance may be obtained.

### (C) Additive

The polycarbonate resin composition according to one embodiment may include at least one additive of an antibacterial agent, a heat stabilizer, an antioxidant, a release agent, a light stabilizer, an inorganic material additive, a surfactant, a coupling agent, a plasticizer, an admixture, a stabilizer, a lubricant, an antistatic agent, a coloring aid, a flame proofing agent, a weather-resistance agent, a colorant, an ultraviolet (UV) absorber, an ultraviolet (UV) blocking agent, a flame retardant, a filler, and the like.

The antioxidant may include a phenol-type, a phosphite-type, a thioether-type, or an amine-type antioxidant. The release agent may include a fluorine-including polymer, silicone oil, a metal salt of stearic acid, a metal salt of montanic acid, montanic acid ester wax, or polyethylene wax. The weather-resistance agent may be a benzophenone-type or an amine-type. The colorant may include a dye or a pigment. The ultraviolet (UV) blocking agent may include titanium dioxide (TiO₂) or carbon black, and the filler may include a glass fiber, a carbon fiber, silica, mica, alumina, a clay, calcium carbonate, calcium sulfate, or glass bead.

The additive may be included in a predetermined amount as long as it does not deteriorate the properties of the polycarbonate resin composition. In one embodiment, it may be included in an amount of 30 parts by weight or less based on 100 parts by weight of the mixed resin including the polycarbonate resin, polybutylene terephthalate resin and polycarbonate-polysiloxane copolymer. In another embodiment, it may be included in an amount of about 0.1 to 20 parts by weight based on 100 parts by weight of the mixed resin.

The polycarbonate resin composition may be prepared by a known method for preparing a resin composition. For example, the constituting components and other additives are simultaneously mixed and melt-extruded through an extruder to provide a pellet.

According to another embodiment, a molded product made of the above polycarbonate resin composition is provided. In other words, molded products may be made of the polycarbonate resin composition through diverse processes such as injection molding, blow molding, extrusion molding, thermal molding and so forth. In particular, the polycarbonate resin composition may be used for diverse kinds of products that simultaneously require excellent low-temperature impact resistance and heat resistance, such as electronic parts, automobile parts, and general products, particularly, automobile exteriors that are exposed outwardly, such as bumper.

The following examples illustrate the present invention in more detail. However, they are exemplary embodiments and are not limiting.

A polycarbonate resin composition according to an embodiment included the following components.

### (A) Mixed resin

### (A1) Polycarbonate (PC) resin

SC-1080 having a weight average molecular weight of 28,000 g/mol and produced by Cheil Industries is used.

### (A2) Polybutylene terephthalate (PBT) resin

DHK 011 having an intrinsic viscosity[η] of 1.2 dℓ/g and produced by Shinkong corporation is used.

### (A3) Polycarbonate-polysiloxane copolymer

Tarflon produced by Idemitsu Kosan Co., Ltd., is used.

### (B) Graft copolymer

Metablen C223-A produced by MRC is used.

### (B') acrylonitrile-butadiene-styrene graft copolymer (g-ABS)

CHT produced by Cheil Industries is used.

### Examples 1 to 4 and Comparative Examples 1 to 3

Polycarbonate resin compositions according to Examples 1 to 4 and Comparative Examples 1 to 3 are prepared using the aforementioned constituting components in the compositions presented in the following Table 1.

As for the preparation method, the components are mixed in the compositions shown in the following Table 1, extruded with a typical twinscrew extruder, and the extruded products are prepared in the form of pellets.

### Experimental Examples

The manufactured pellets are dried at 100° C for 4 hours and specimens for examining physical properties are prepared by using an injection molding machine with an injection molding capability of 6 oz and setting a cylinder temperature at 250° C, casting temperature at 60° C and molding cycle at 30 seconds, and injection-molding ASTM specimens.

The physical properties of the physical property specimens are measured in the following method, and the results are presented in the following Table 1.
(1) IZOD Impact strength: Measured based on ASTM D256 specification at -30° C (thickness of specimen 1/8").
(2) Thermal distortion temperature (HDT): Measured based on ASTM D648 specification.
(3) Gloss (60°): Measured based on ASTM D523 specification by setting BYK-Gardner Gloss Meter measurement angle at 60° .

**(Table 1)**

| | | Examples | | | | Comparative Examples | | |
|---|---|---|---|---|---|---|---|---|
| | | 1 | 2 | 3 | 4 | 1 | 2 | 3 |
| (A) mixed resin | (A1) PC resin (wt%) | 50 | 35 | 30 | 45 | 40 | 50 | 40 |
| | (A2) PBT resin (wt%) | 40 | 45 | 45 | 30 | 35 | 50 | 45 |
| | (A3) polycarbonate-polysiloxane copolymer (wt%) | 10 | 20 | 25 | 25 | - | - | 15 |
| (B) graft copolymer (parts by weight*) | | 17 | 12 | 10 | 8 | - | 20 | - |
| (B') g-ABS copolymer (wt%) | | - | - | - | - | 25 | - | - |
| IZOD Impact strength (kgf · cm/cm) | | 50 | 52 | 51 | 50 | 35 | 52 | 33 |
| Thermal distortion temperature (°C) | | 91 | 90 | 92 | 94 | 80 | 81 | 90 |
| Gloss (60°) | | 89 | 90 | 90 | 93 | 91 | 90 | 91 |

| | | | | | | | | |
|---|---|---|---|---|---|---|---|---|
| * Parts by weight: a unit representing an amount based on 100 parts by weight of the mixed resin A. | | | | | | | | |

It may be seen from Table 1 that Examples 1 to 4 which include a mixed resin including a polycarbonate resin, a polybutylene terephthalate resin, and a polycarbonate-polysiloxane copolymer, and a graft copolymer containing an acryl-based compound showed excellent impact resistance at low temperature and heat resistance and excellent gloss on the appearances of a molded product, compared with Comparative Examples 1 to 3 that do not include at least one between the polycarbonate-polysiloxane copolymer and a graft copolymer containing an acryl-based compound.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims. Therefore, the aforementioned embodiments should be understood to be exemplary but not limiting the present invention in any way.

## Claims

1. The polycarbonate resin composition, comprising
(A) a mixed resin comprising
(A1) 20 to 80 wt% of a polycarbonate resin;
(A2) 15 to 70 wt% of a polybutylene terephthalate resin; and
(A3) 5 to 30 wt% of a polycarbonate-polysiloxane copolymer; and
(B) 8 to 25 parts by weight of a graft copolymer including an unsaturated compound including an acryl-based compound graft-polymerized into a rubber of a diene-based compound, based on 100 parts by weight of the mixed resin (A), wherein the unsaturated compound further comprises a hetero cyclic compound, an aromatic vinyl compound, a vinyl cyanide compound or a combination thereof.

2. The polycarbonate resin composition of claim 1, wherein the polycarbonate-polysiloxane copolymer (A3) comprises 1 to 99 wt% of a polycarbonate block and 1 to 99 wt% of a polysiloxane block.

3. The polycarbonate resin composition of any of claims 1 to 2, wherein the polycarbonate-polysiloxane copolymer (A3) has a weight average molecular weight of 10,000 to 30,000 g/mol.

4. The polycarbonate resin composition of any of claims 1 to 3, wherein the polycarbonate resin composition further comprises at least one additive of an antibacterial agent, a heat stabilizer, an antioxidant, a release agent, a light stabilizer, an inorganic material additive, a surfactant, a coupling agent, a plasticizer, an admixture, a stabilizer, a lubricant, an antistatic agent, a coloring aid, a flame proofing agent, a weather-resistance agent, a colorant, an ultraviolet (UV) absorber, an ultraviolet (UV) blocking agent, a flame retardant, a filler, or a combination thereof.

5. A molded product obtainable from the polycarbonate resin composition of any one of claims 1 to 4.

## Patentansprüche

1. Polycarbonatharzzusammensetzung, umfassend
(A) ein Mischharz umfassend
(A1) 20 bis 80 Gew.-% eines Polycarbonatharzes;
(A2) 15 bis 70 Gew.-% eines Polybutylenterephthalatharzes; und
(A3) 5 bis 30 Gew.-% eines Polycarbonat-Polysiloxan-Copolymers; und
(B) 8 bis 25 Gewichtsteile eines Pfropf-Copolymers, einschließend eine ungesättigte Verbindung, die eine Verbindung auf Acrylbasis einschließt, die in einen Kautschuk einer Verbindung auf Dien-Basis pfropfpolymerisiert ist, bezogen auf 100 Gewichtsteile des Mischharzes (A), wobei die ungesättigte Verbindung weiterhin eine heterozyklische Verbindung, eine aromatische Vinylverbindung, eine Vinylcyanidverbindung oder eine Kombination davon umfasst.

2. Polycarbonatharzzusammensetzung nach Anspruch 1, wobei das Polycarbonat-Polysiloxan-Copolymer (A3) 1 bis 99 Gew.-% eines Polycarbonat-Blockes und 1 bis 99 Gew.-% eines Polysiloxan-Blockes umfasst.

3. Polycarbonatharzzusammensetzung nach irgendeinem der Ansprüche 1 bis 2, wobei das Polycarbonat-Polysiloxan-Copolymer (A3) ein Gewichtsmittel des Molekulargewichts von 10.000 bis 30.000 g/mol aufweist.

4. Polycarbonatharzzusammensetzung nach irgendeinem der Ansprüche 1 bis 3, wobei die Polycarbonatharzzusammensetzung weiterhin wenigstens ein Additiv eines antibakteriellen Mittels, eines Hitzestabilisators, eines Antioxidationsmittels, eines Trennmittels, eines Lichtstabilisators, eines anorganischen Materialadditivs, eines oberflächenaktiven Mittels, eines Kupplungsmittels, eines Weichmachers, eines Gemisches, eines Stabilisators, eines Schmiermittels bzw. Gleitmittels, eines antistatischen Mittels, eines Färbehilfsmittels, eines Flammschutzmittels, eines Wetterbeständigkeitsmittels, eines Farbstoffs, eines Ultraviolett-(UV)-Absorbers, eines Ultraviolett-(UV)-Blockmittels, eines Flammenverzögerungsmittels, eines Füllstoffs, oder einer Kombination davon umfasst.

5. Formerzeugnis, erhältlich aus der Polycarbonatharzzusammensetzung nach irgendeinem der Ansprüche 1 bis 4.

## Revendications

1. Composition de résine de polycarbonate, comprenant
(A) une résine mixte comprenant
(A1) 20 à 80 % en poids d'une résine de polycarbonate ;
(A2) 15 à 70 % en poids d'une résine de poly(téréphtalate de butylène) ; et
(A3) 5 à 30 % en poids d'un copolymère polycarbonate-polysiloxane ; et
(B) 8 à 25 parties en poids d'un copolymère greffé comprenant un composé insaturé comprenant un composé à base acrylique polymérisé par greffage à un caoutchouc d'un composé à base diénique, pour 100 parties en poids de la résine mixte (A), le composé insaturé comprenant en outre un composé hétérocyclique, un composé vinylaromatique et un composé cyanure de vinyle ou une combinaison de ceux-ci.

2. Composition de résine de polycarbonate selon la revendication 1, dans laquelle le copolymère polycarbonate-polysiloxane (A3) comprend 1 à 99 % en poids d'un bloc polycarbonate et 1 à 99 % en poids d'un bloc polysiloxane.

3. Composition de résine de polycarbonate selon l'une quelconque des revendications 1 à 2, dans laquelle le copolymère polycarbonate-polysiloxane (A3) a une masse moléculaire moyenne en masse de 10 000 à 30 000 g/mole.

4. Composition de résine de polycarbonate selon l'une quelconque des revendications 1 à 3, dans laquelle la composition de résine de polycarbonate comprend en outre au moins un additif qui est un agent antibactérien, un stabilisant thermique, un antioxydant, un agent de démoulage, un photostabilisant, un additif matériau inorganique, un tensioactif, un agent de couplage, un plastifiant, un mélange additionnel, un stabilisant, un lubrifiant, un agent antistatique, un auxiliaire de coloration, un agent d'ignifugation, un agent de résistance aux intempéries, une substance colorante, un agent absorbant les ultraviolets (UV), un agent bloquant les ultraviolets (UV), un retardateur de flamme, une charge ou une combinaison de ceux-ci.

5. Produit moulé pouvant être obtenu à partir de la composition de résine de polycarbonate selon l'une quelconque des revendications 1 à 4.
